# EUROPEAN PATENT APPLICATION

(11) **EP 1 202 599 A2**
(43) Date of publication of application: **02.05.2002**
(21) Application number: 01309189.7
(22) Date of filing: 30.10.2001
(51) Int. Cl.: H04Q 11/00, H04L 12/56

(54) **System and method for routing IP packets using an optical core**

(30) Priority: 31.10.2000 US 703057
(71) Applicant: Chiaro Networks Ltd., Richardson, Texas 75080 (US)
(72) Inventor: Brewer, Tony M., Plano, Texas 75093 (US); Blackmon, Harry C., Plano, Texas 75023 (US); Dozier, Harold W., Dallas, Texas 75248 (US); Kleiner, Jim, Dallas,Texas 75240 (US); McDermott, Thomas C.,III, Plano, Texas 75094 (US); Palmer, Gregory S., Plano, Texas 75025 (US); Shaw, Keith W., Plano, Texas 75023 (US); Wallach, Steven J., Dallas, Texas 75248 (US); Watson, Thomas Lee, Dallas, Texas 75218 (US); Elazar, Uri, Hagalill 17920 (IL); Liu, Bing, Richardson, Texas 75082 (US); Shekel, Eyal, Jerusalem (IL); Visser, Lance Arnold, Dallas, Texas 75252 (US)
(74) Representative: Jackson, Richard Eric

(57) **Abstract**

An IP router with an optical core switches 40-byte packets at OC192 speed in 32 to 40 nanoseconds, with dynamic switch reconfiguration between consecutive packets. Optical switches have a 64 by 64 cross bar configuration. Embodiments are smoothly scalable from roughly ten interfaces up to 640 input/output ports. The system contains a central arbiter, which controls switch configurations, and incorporates redundancy throughout, including switches, arbiter, facility interface functionality, communication paths, control network, routing network, and master control processors. The preferred embodiment incorporates one-plus-one input protection. If there is a failure on any path, an alternate path reliably and seamlessly carries the traffic. All single point failures are confined to that part of the router system where they originate. One router need not communicate fault conditions to other routers to change their internal routing tables. Consequently, the network topology of a very large network remains static, since any errors in a router are confined within that router or between a pair of router systems having redundant interfaces. The method incorporates extensive internal error checking and correcting. The system is designed for no more than 50 milliseconds switchover time due to any single point failure. When a module fails, it can be hot-swapped with a new module without bringing down the system. High-speed optical interconnects, *e.g.*, between equipment racks, allow rack separations of up to 150 meters.

## Description

### RELATED APPLICATIONS

This application is related to concurrently filed, co-pending, and commonly assigned U.S. Application Serial Number 09/703,056, entitled "System and Method for Router Central Arbitration," to concurrently filed, co-pending, and commonly assigned U.S. Application Serial Number 09/703,038, entitled "System and Method for Router Data Aggregation and Delivery," to concurrently filed, co-pending, and commonly assigned U.S. Application Serial Number 09/702,958, entitled "Timing and Synchronization for an IP Router Using an Optical Switch," to concurrently filed, co-pending, and commonly assigned U.S. Application Serial Number 09/703,027, entitled "Router Network Protection Using Multiple Facility Interfaces," to concurrently filed, co-pending, and commonly assigned U.S. Application Serial Number 09/703,043, entitled "Router Line Card Protection Using One-for-N Redundancy" and to concurrently filed, co-pending, and commonly assigned U.S. Application Serial Number 09/703,064, entitled "Router Switch Fabric Protection Using Forward Error Correction," the disclosures of which are incorporated herein by reference.

### TECHNICAL FIELD

This application relates to the field of optical communication networks, and particularly to large-scale routers for optical communication networks.

### BACKGROUND

Systems communicate with one another through a network, which must span and communicate with all of these systems. Currently the network terminals are typically household PCs or office computer systems. What actually communicates between the network terminals are information packets, for example Internet Protocol (IP) packets.

A packet is a collection of data. There is typically a header at the beginning of the packet to identify the packet type, any of its specific characteristics, any type of routing that has to be done, and the source and destination of the packet. There is also a payload for the packet, which is the data that is to be transferred from the source to the destination. Many types of packets exist within the Internet Protocol. Many types of interface protocols are used, including SONET (Synchronous Optical Network) interfaces and Ethernet interfaces. A vast array of communication mechanisms are used in the industry.

In practice, a source system computer applies a header to the packet, which specifies among other things the source and destination. In an IP packet, it does that by specifying a four-byte source IP address as well as a four-byte destination IP address. When a source computer sends a packet, the packet goes to some type of routing apparatus, typically within the site where it is located, where the header is examined and where it is decided which direction to route that packet. The packet is then routed through an appropriate one of the outbound ports of the local router. Eventually, either the packet will stay within that local site (destined for one of the local machines), or it will be sent to a destination across the network. If the packet is to go outside the local site, it typically goes across a telecommunication network, typically through an Internet service provider. The service provider receives the packet from whatever data transmission medium that it is traveling through.

At that point the packet goes to a local router of the service provider, which then sends it out of the Internet service provider to an edge router, which is part of the core of a telecommunication network. The edge router is located on the edge of the network and performs interfacing functions between the Internet service providers and the core itself. The edge router's function, among other things, is to prevent particular packets from coming through, for example, those containing viruses. After all the checks are done by the edge router, the packet is passed to a core router in the network.

Core routers form the central part of a telecommunication network and perform general routing between edge routers. There can be multiple core routers in a network. The packet travels from one core router to the next core router, and eventually reaches the destination edge of the network core. A destination edge router receives the packet and decides where it goes from there. Typically it goes to an Internet service provider attached to the edge router. If the destination is a household PC, the Internet service provider then sends the packet to the destination computer. If there is corporate access to the network, the packet may go from the edge router directly to a corporate site.

Core routers today are relatively small in size, typically one to two equipment racks with the port count limited to the order of 32 OC192 ports, in other words, 32 ten-gigabit-per-second ports. Within the core of the network, routers typically have higher interface rates than do the edge routers or the Internet service providers. Edge routers have rates anywhere from OC12 to OC48, where OC12 is a 622 megabit-per-second interface, OC48 is a 2.5 gigabit-per-second interface, and OC192 is a ten gigabit-per-second interface. Those interfaces generally use the SONET standard, adopted by all telecom networks, enabling their equipment to communicate with each other. IP routers work with Internet Protocol packets, ranging in size anywhere from 40 bytes to 9,000-byte jumbo frames. 40-byte packets typically constitute a large percent of packets through a given network. Within the SONET standard, the basic information unit is a frame. Within a frame there can be multiple packets, specifically IP packets, which are framed with Point-to-Point Protocol (PPP) and High level Data Link Control (HDLC) overhead. Within a corporate site, typically, an Ethernet-type physical interface protocol is used. In a system that starts with a home PC, information typically goes through a modem interface that connects to an Internet service provider. The Internet service provider can use Ethernet within the site, whereas edge routers typically convert to SONET standard at OC3 or OC12 data rates, and core routers typically convert to SONET standard at OC12 or OC48. In the future, core routers are expected to operate at OC48 or OC192.

Currently available core routers have limitations largely because they evolved out of smaller sized routers that were forced into large networks. A principal present limitation is size - 32 ports is not nearly large enough for the network sizes that are projected. A second limitation is scalability - in order to achieve the size that will be needed in the future, a system is needed that can scale in size from as small as 16 ports up to several hundreds of ports. The scaling needs to be uniform to avoid adverse impact on performance, for example, latency through the router.

Another limitation of present routers is reliability. Most telecom equipment today that uses the SONET standard has a one-plus-one protection scheme at the input, for example one working fiber and one standby fiber. Those optical fiber links typically take separate physical paths to get from one site to another site. If there is trouble with one fiber path, the probability of having that same problem with the other path is extremely low. Today's routers typically do not incorporate one-plus-one redundancy, but generally have a single link for each communication path. Thus, if a particular path through the router has a problem, that router must be removed from service and the entire network must be reconfigured to send all traffic along completely different paths. Thus, in the event of a single point of failure in the system, the entire network configuration is affected.

If it is necessary to modify the entire network transmission path configuration every time there is a single point of failure somewhere, then it is necessary to over-provision the entire network to be able to deal with a failure of this type to avoid impacting a customer's perception of performance. One aspect that is important to telecom, especially with voice-type messaging, is to have very reliable transmission, such that no individual stream of communication (for example voice communication) will appear as if it has been interrupted. On the contrary, in the event of a single point of failure in today's router systems, it is necessary to divert the traffic and reconfigure the network, which requires multiple seconds (if not minutes or hours) to restore the system to an acceptable level of service. Any communication that occurs over those particular lines during this reconfiguration process is lost.

Additionally, an issue that arises with relatively small routers is that to create a large network it is necessary to cascade many routers. Thus, instead of having a large router, it is necessary to interconnect a large number of smaller routers together to perform the function of that large router. Among other drawbacks, this adds latency through the path because, instead of going through a single large router, data packets are pipelined through many small routers, each with its own overhead and delay characteristics. This also increases traffic congestion. Further, it is much more difficult to manage a large number of small routers than a single large router.

In order to scale to a large router with several hundred ports, it is necessary to have a router switching fabric with uniform scaling properties. A fabric is a collection of devices which cooperatively provide a general routing capability. One example of a fabric with these properties is a centralized crossbar. Electrical crossbars typically have scalability limitations, limiting the size to tens of ports at a maximum. In order to scale to larger systems, prior routers have used distributed switching fabrics. These fabrics typically have multiple arbitration points to traverse the fabric, resulting in increased fabric latency and congestion hot spots within the fabric.

Previous IP routers have been unable to take advantage of optical switch technology due to their size and reconfiguration speed limitations. In order to utilize an optical switch for the fabric of an IP router, the fabric must be able to change configurations quickly enough to efficiently route the shortest IP packet, on order of tens of nanoseconds. Present optical switch technology requires milliseconds for reconfiguration. Additionally, present optical switch technology is severely limited to just a small number of ports, such that an optical switch is unable to scale to large numbers of inputs and outputs.

### SUMMARY OF THE INVENTION

The present invention is directed to a system and method which incorporate an IP router having an optical core. The switching rate of a 40-byte packet at OC192 speed is on the order of 32 to 40 nanoseconds including overhead. The present system employs dynamic optical switching between consecutive packets. The switching rate of the optical switch itself is fast enough to switch these packets efficiently. Various aspects of the invention are described in concurrently filed, co-pending, and commonly assigned U.S. Application Serial Number 09/703,056, entitled "System and Method for Router Central Arbitration," concurrently filed, co-pending, and commonly assigned U.S. Application Serial Number 09/703,038, entitled "System and Method for Router Data Aggregation and Delivery," concurrently filed, co-pending, and commonly assigned U.S. Application Serial Number 09/702,958, entitled "Timing and Synchronization for an IP Router Using an Optical Switch," concurrently filed, co-pending, and commonly assigned U.S. Application Serial Number 09/703,027, entitled "Router Network Protection Using Multiple Facility Interfaces," concurrently filed, co-pending, and commonly assigned U.S. Application Serial Number 09/703,043, entitled "Router Line Card Protection Using One-for-N Redundancy" and concurrently filed, co-pending, and commonly assigned U.S. Application Serial Number 09/703,064, entitled "Router Switch Fabric Protection Using Forward Error Correction," the disclosures of which are incorporated herein by reference.

An embodiment of the system routers of the present invention contains up to 640 input/output ports versus on the order of 24 or 32 ports in prior systems. Further, the system is smoothly scalable to that number of ports, starting with one shelf worth of interfaces containing ten interfaces, and expanding, for example, to 64 of those shelves in a fully configured system. Scaling from the minimum size system up to the maximum size system is relatively linear. There is a central core of this system with which all of the shelves containing ports must communicate. This central part of the system contains an optical switch shelf which contains switches, as well as an arbiter shelf, which has the function of actually controlling the configuration for the optical switches.

The system has no single point of failure, incorporating redundant mechanisms at all points, including optical switches and the central arbiter function, as well as all functionality in the line shelves that contain the facility interfaces. The system includes redundancy in all communication paths, the control network, the routing network, and the master control processors of the system. The preferred embodiment is configured to incorporate one-plus-one facility protection. The system also includes redundant optical switch paths, such that if there is a failure on either path, the other path reliably carries the traffic. For example, with voice communication, if one of the two optical switch paths fails, the data path is quickly switched to the standby path without loss of any packets. Thus a user would not recognize that a fault switchover had occurred. The system is designed to lose traffic, if at all, for no more than 50 milliseconds due to failure at any point in the system.

Additionally, the system includes an extensive amount of internal error checking and correcting on control paths. In places in which only error checking is done, those errors are tolerated. Protocols exist such that a detected error causes control information to be dropped. The dropped information is eventually detected and resent. These mechanisms provide very reliable operation in the presence of communication errors.

Another feature of the system is that all internal modules are hot-swappable. When a particular module within a shelf fails, it can be hot-swapped with a new module without bringing down the system. The new module can be brought online while the system is running, and verified so that when it is put in service, it is known to be able to pass traffic without causing further problems. The system is capable of containing any faults within itself. Thus, in the event of any problem within the immediate system, redundant mechanisms take over and continue to pass traffic seamlessly through the optical switch. As a result, a single failure does not produce effects outside of the immediate system. This reduces network core configuration traffic, in that each router rarely needs to communicate fault conditions to other routers to change their internal routing tables. Consequently, the network topology of a very large network can be nearly static, since any errors in a router are confined within that router or are confined between a pair of router systems having redundant interfaces, such that one can switch over to the other.

Within the preferred embodiment, all high-speed interconnects, e.g., those above a hundred megabits per second, are implemented with optical links. All communication between equipment shelves is done through optical links, except for the control network, which is 100BT Ethernet. This allows for lightweight communication media between shelves, eliminating the heavy weight of copper cabling. Optical links are also immune to EMI interference between various communication paths between these shelves. These optical links are particularly advantageous for communicating over long distances. Any pair of shelves of the system can communicate over a separation of up to 150 meters between them. Importantly for telecom carriers, equipment placement is not confined to a single contiguous location within a central office, but can be spread out by up to 150 meters between shelves, and thus distributed among racks in available spots within a central office. This distance is expected to increase as technology advances.

A key feature of the present system is the unique topology of the optical core. Optical switches for the system presently have a 64 by 64 crossbar configuration. Yet, with this 64 by 64 configuration, up to 320 ports can be switched. This unique topology allows trade-off of the speed-up factor of the core, independent of the number of ports connected to the switch. In a future embodiment, the optical switch can have a 128 by 128 crossbar configuration, allowing the full 640 port capacity of the present system to be utilized.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWING

For a more complete understanding of the present invention, reference is now made to the following descriptions taken in conjunction with the accompanying drawing, in which:
Fig. 1 is a simplified overview block diagram of a router system, in accordance with embodiments of the present invention;
Figs. 2A-2C form a schematic diagram showing an overview of the data paths through a router, in an embodiment of the present invention;
Fig. 3 is a diagram illustrating control data flow in a router, according to an embodiment of the present invention;
Fig. 4 is a block diagram showing a service queue flow control structure in a router, according to an embodiment of the present invention;
Fig. 5 is a flow diagram showing the communication paths that are used between a master control processor and the packet forwarding modules;
Fig. 6 is a schematic diagram showing a logical view of a control subsystem for a router, according to an embodiment of the present invention; and
Fig. 7 is a clock distribution diagram for a router, according to an embodiment of the present invention.

### DETAILED DESCRIPTION

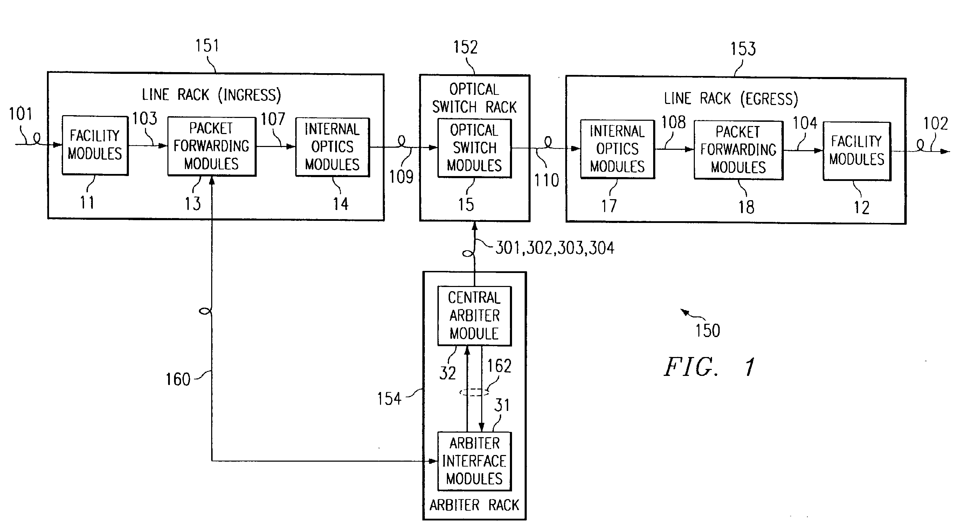

Fig. 1 is a simplified overview block diagram of a router system 150 in accordance with embodiments of the present invention. Internet Protocol (IP) packets arrive into this system over an optical link 101. For ease of understanding, optical links as shown in the figures have circular loops above the line. On link 101, the communication protocol can be, for example, gigabit Ethernet, 10-gigabit Ethernet, OC48C, OC192, or OC192C SONET. Link 101 can consequently have many alternative types of interfaces. Optical link 101 is connected to a facility module 11 at a line shelf 151 in a line rack. In general, there are multiple input optical links 101 and facility modules 11, such that each input protocol is accommodated by a different facility module. Link 103 is connected to the output side of the appropriate facility module. If SONET protocol packets are received, facility module 11 strips off the SONET overhead as well as High level Data Link Control (HDLC) and Point-to-Point Protocol (PPP) overheads that encapsulate the packet. Facility module 11 then delivers raw IP packets across link 103. If Ethernet protocol packets are received and if facility module 11 is an Ethernet facility module, then Ethernet facility module 11 strips off Ethernet overhead, *e.g.*, Media Access Controller overhead, and similarly delivers a raw IP packet through link 103. In the preferred embodiment, communication within a shelf is typically done electrically, although it can be done optically, whereas all links that interconnect between shelves are high speed and optical in nature. For example, link 101 is optical, whereas link 103 is electrical.

A packet forwarding module 13 receives the raw IP packets through link 103. At that point in time, a forwarding engine (not shown in Fig. 1) within packet forwarding module 13 examines the headers of the IP packets, looks at the 4-byte IP addresses, compares these with a forwarding information base, and determines the right destination, i.e., output port, within router 150 for each packet. The forwarding engine then prepends that information onto the beginning of the packet and delivers it to an ingress ASIC contained in packet forwarding module 13. The ingress ASIC receives the packet and loads it into an appropriate queue, based on the destination of the packet within router 150.

For each output queue contained in an egress packet forwarding module 18 located in egress line rack 153, there is a virtual output queue in the ingress ASIC of packet forwarding module 13. In a large system, there are on the order of 3,000 active virtual output queues into which a packet can be loaded. The ingress ASIC then examines all packets that are loaded into the roughly 3,000 queues and forwards a request through an optical link 160 to an arbiter interface module (AIM) 31 in an arbiter rack 154. Although optical link 160 is actually a duplex optical fiber link incorporating two unidirectional fibers, for simplicity optical link 160 is shown in Fig. 1 as a bi-directional single fiber. Arbiter rack 154 contains a central arbiter module (CAM) 32 in addition to arbiter interface modules 31. Arbiter interface module 31 receives the request optically and then converts it to an electrical signal, which is delivered through an electrical link 162 to CAM 32. There is only one active central arbiter module 32 in an entire router system and one standby central arbiter module (not shown in Fig. 1) for protection.

The central core of router 150 includes an optical switch in an optical switch module 15 contained in an optical switch rack 152. All information moves through optical switch module 15 in chunks. A chunk is defined as a uniformly sized unit of information that is passed through an optical switch module 15 during one cycle of the switch. A chunk is a fixed quantity of information, which in this particular embodiment is 330 nanoseconds long. In the preferred embodiment, a chunk contains 400 bytes of payload information and on the order of 50 bytes of overhead, for example headers and trailers. After a chunk passes through optical switch module 15, then before another chunk can pass through, the configuration of optical switch module 15 is typically changed.

In each optical switch cycle there is a segment of time during which chunks of information go through optical switch module 15 and another segment of time during which the optical switch module 15 is reconfigured (new set of input/output ports) for a next chunk. These two segments of a switch cycle, termed respectively "dark period" during which optical switch cartridge 19 is reconfigured and essentially no information passes through it and "light period" during which information passes through the optical switch, are together termed a "chunk period".

CAM 32 examines all requests from all packet forwarding modules 13 on a per chunk period basis. Active CAM 32 decides which requests to grant and determines the configuration for the optical switch for every chunk period. Active CAM 32 receives request information when packets arrive in the router. Eventually, the requests make their way to active CAM 32. Active CAM 32 then analyzes all the requests from the various input sources and passes configuration information for a chunk period through links 301-304 to an optical switch ASIC (not shown in Fig. 1) in optical switch shelf 152. Active CAM 32 also passes grants through links 162 to AIM modules 31. AIM modules 31 then pass that grant information back to ingress packet forwarding modules 13 through fiber optic links 160. Packet forwarding modules 13 receive the grant and create the actual information payload that is in a chunk. That information payload is then passed to internal optics modules 14, which receive the information payloads, append Forward Error Correction (FEC) information, and encapsulate them into chunks.

Grants of requests for a given chunk period are sent back electrically from active CAM 32 through links 162 in arbiter shelf 154 to arbiter interface modules 31, which then convert the grants to optical signals through optical link 160 back to packet forwarding module 13. Concurrently, central arbiter module 32 optically delivers switch configuration information, for the same chunk period corresponding to the grants, to optical switch module 15 through optical links 301, 302, 303 and 304. Packet forwarding module 13 receives the grants and from those grants recognizes the configuration in which the optical switch will be placed. When packet forwarding module 13 receives a grant, the grant is used to determine from which virtual output queue to select packets to load into the next 400-byte chunk payload. Packet forwarding module 13 then creates chunks out of packets contained in the selected ingress queue. A packet forwarding module selects from this queue as many packets as necessary to fill a chunk If a large number of small packets exist in the queue, then multiple small packets will be used to fill the chunk. If a packet exists exceeding the payload capacity of the chunk, then that larger packet is broken down into smaller pieces not exceeding 400 bytes to be distributed into multiple chunk payloads. Thus, the grants that come back through optical link 160 are used by packet forwarding module 13 to build chunk payloads from packets. Those chunk payloads of data are then transmitted through electrical link 107 to internal optics module 14.

Internal optics module 14 receives a 400-byte chunk payload and appends a forward error correction (FEC) code, which consists of 32 bytes of forward error correction information, sufficient to correct up to 16 bytes of error once the chunk reaches the egress side of optical switch module 15. Internal optics module 14 then prepends a preamble at the beginning of a chunk to allow clock and data recovery optics to bit-align the chunk. Then internal optics module 14 transmits that chunk optically though link 109 to optical switch module 15. At the same time that the chunk arrives at optical switch module 15, the corresponding switch configuration information from central arbiter module 32 has also arrived at optical switch module 15 and has configured the switch, such that all the chunks that have arrived are targeted to the desired output port of optical switch 15. The chunk then passes through the optical switch to the predetermined output port and through an optical link 110 to an internal optics module 17 in line shelf 153 at the egress side of the optical switch. Of importance, switch configuration information through optical links 301-304 must arrive at optical switch module 15 synchronously with the arrival of the corresponding chunk through optical link 109.

Egress internal optics module 17 bit-aligns the chunk in accordance with the preamble, which is typically an alternating series of ones and zeros to facilitate quick and reliable alignment. Then the preamble is stripped off, and the FEC information within the chunk corrects any errors incurred during transmission through optical switch 15. A low error rate on the order of 10⁻¹⁰ to 10⁻¹⁵ is expected through optical switch 15, which is easily corrected by the FEC to restore reliable transmission through the optical switch. Internal optics module 17 then strips off the 32 bytes of FEC code. Within the remaining 400 bytes of chunk information, the chunk payload itself has a header and a trailer. The header and trailer information includes the destination for the chunk as well as a cyclic redundancy check (CRC) that is used to check the entire data content of the chunk. Consequently, of the 400 bytes of the chunk, 2 bytes are CRC to check the data integrity of that chunk. Once the integrity is checked, the chunk is passed through an electrical link 108 to egress packet forwarding module 18.

Packet forwarding module 18 determines, through a redundancy of optical switch modules 15, whether the chunks received are corrected properly, by looking at the CRC that came across links 108. Then packet forwarding module 18 breaks the chunk into its original individual packets. If it contains multiple packets, it will break those out and load them individually into output queues. If the chunk contains a portion of a larger packet, then that chunk is set aside in a buffer memory until the remaining successive chunks of the larger packet arrive. The accumulated chunks are then assembled to re-create the original larger packet. Then the larger packet is loaded into an output queue. For packet forwarding module 18, there are typically multiple output queues, which are organized by output tributaries. Each queue has a number of tributaries associated with the various quality of service (QOS) levels that are associated with that output queue. For example, an OC192 protocol queue can consist of up to four OC48Cs, each of which is considered a tributary. Four OC48Cs, each one with four levels of QOS queuing, can provide up to 16 output queues in a packet forwarding module. Once an output link is available, then a packet is removed from the appropriate queue to be delivered to that output link. Output packet selection similarly uses the QOS level information, such that a higher priority packet goes out the output link first. The packet that is selected to go is passed through an electrical link 104 to an egress facility module 12.

Facility module 12 then applies appropriate headers and trailers to encapsulate the packet for SONET transmission or for Ethernet transmission, whichever is appropriate for that facility module. The packet is then optically transmitted through an optical output link 102 out of the router system 150. Line rack 153 contains line shelves. There can be up to two line shelves per line rack. Line rack 151 on the ingress side and line rack 153 on the egress side can be configured as a single rack, as described below in more detail. Optical switch rack 152 contains optical switch modules 15.

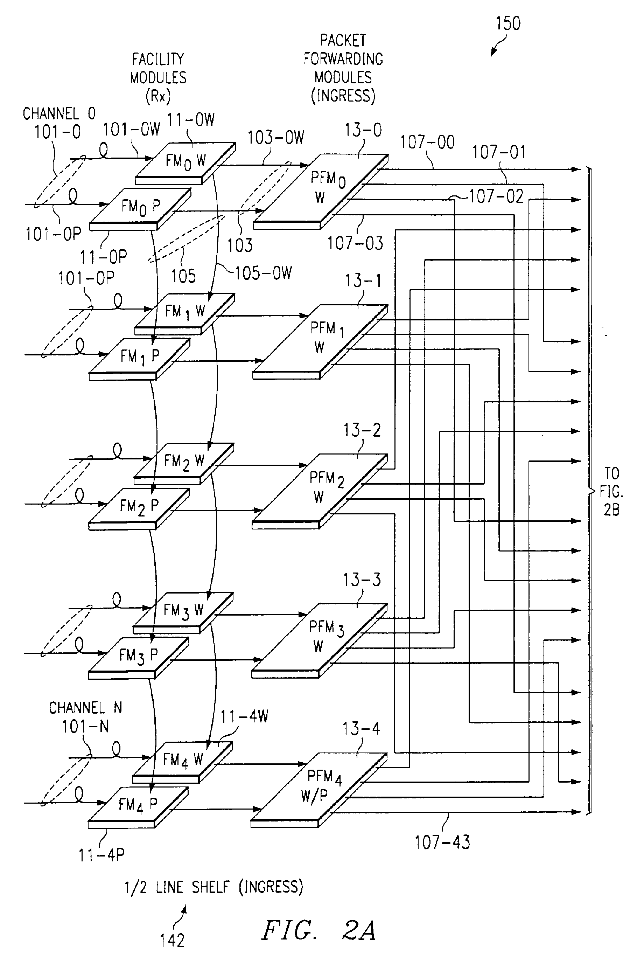

Figs. 2A-2C together form a schematic diagram showing an overview of the data paths through a router 150, in an embodiment of the present invention. Figs. 2A-2C do not show how router system 150 is wired, but simply illustrate the flow of data. For ease of understanding, Figs. 2A-2C are partitioned into three sequentially adjacent panels. At the upper left portion of Fig. 2A, an input 101-0 is a first SONET data channel, formatted as Packet-over-SONET in the present embodiment. Input 101-0 includes two optical fibers, namely a working input fiber 101-0W and a protect input fiber 101-0P. Fibers 101-0W, 101-0P carry duplicated information into router 150 from a peer source equipment e.g., another router or piece of SONET transmission equipment, compatible with the Packet-over-SONET format. Protect and working facility module cards 11-0P and 11-0W independently receive duplicate input from respective optic fibers 101-0P and 101-0W and perform an integrity check on the information by computing SONET parity and SONET framing words to determine if the information is valid and independently check SONET protection switching 'K' Bytes. Both facility modules 11-0W and 11-0P perform essentially identical functions on the information. Each facility module independently evaluates the SONET frame and determines whether the information contained on it is valid. Facility modules 11-0W and 11-0P then extract packets from their respective SONET frames and transfer those packets over a packet bus 103 to a packet forwarding module (PFM) 13-0.

Working facility module 11-0W and protect facility module 11-0P respectively provide duplicate input interfaces 103-0W and 103-0P to packet forwarding module 13-0. A system controller (not shown in Figs. 2A-2C) examines the status of facility modules 11-0W and 11-0P and selects as the in-service facility module the one that is receiving properly framed and bit-error-free packets on its input, in accordance with the SONET standard or as selected by SONET 'K' Bytes. Should the information coming into a facility module, for example facility module 11-0P, have bit errors or other defects, then facility module 11-0P raises an alarm at the system controller. The system controller then selects facility module 11-0W as the source of input from that channel, and facility module 11-0W strips the packets out of the SONET framing overhead and transfers those raw packets over bus 103-0W to packet forwarding module 13-0. Typically facility modules 11-0W and 11-0P, along with packet forwarding module 13-0, are contained in a line shelf, denoted in Fig. 2A as ½ line shelf 142 (ingress) and described below in more detail.

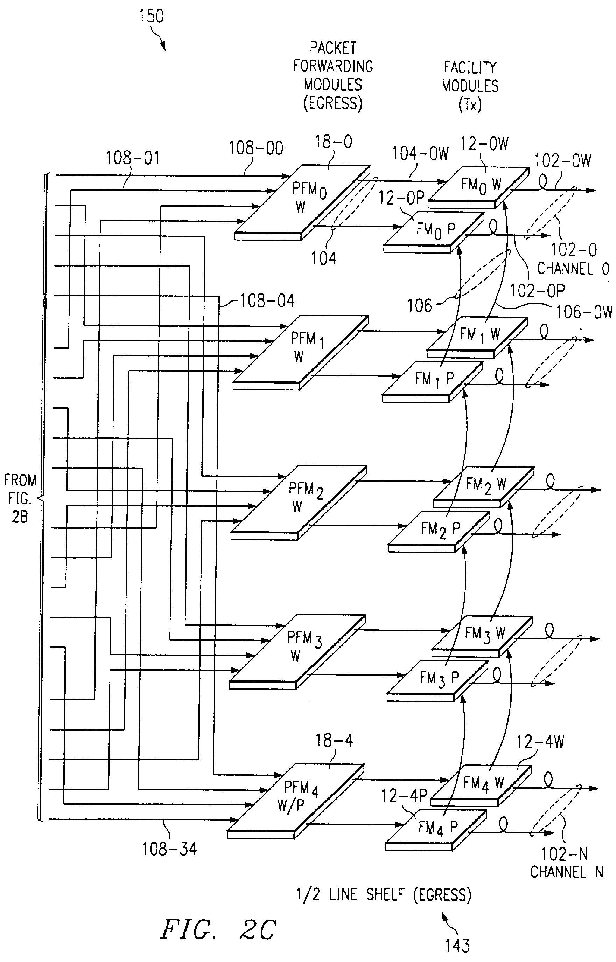

There are actually N+1 packet forwarding modules 13-0 through 13-N. In the example shown in Fig. 2A, N equals 4, including four working packet forwarding modules 13-0 through 13-3 and a fifth designated protect packet forwarding module 13-4. In this case packet forwarding module 13-4 is a spare module available to replace any working module 13-0 through 13-3. Should any one of those packet forwarding modules 13-0 through 13-3 fail, then fifth packet forwarding module 13-4 is available to substitute for the failed packet forwarding module 13-0 through 13-3. This protection configuration is known as "one-for-four" protection. Similarly, on the output side of router 150 shown in Fig. 2C, packet forwarding modules 18-0 through 18-3 are all working modules, and packet forwarding module 18-4 is a spare protect packet forwarding module available as a replacement in the event of failure of any packet forwarding module 18-0 through 18-3. Typically packet forwarding modules 18-0 through 18-4 are contained in a line shelf, denoted in Fig. 2C as ½ line shelf 143 (egress) and described below in more detail.

Protection works through a daisy chain data bus 105 cascading from Channel 0 to Channel 1, to Channel 2, to Channel 3, and to Channel 4, linking facility modules 11-0W through 11-4W. A duplicate data bus interconnects from Channel 4 up to Channel 0, linking facility modules 11-4P through 11-0P. If for example packet forwarding module 13-1 were to fail, then input facility modules 11-1P and 11-1W send their traffic down data bus 105 linking facility modules 11-2 and 11-3 to facility module 11-4, which then switches those inputs to protect packet forwarding module 13-4. Thus if one channel fails, traffic, instead of going through the failed channel, goes down data bus chain 105 to designated protect module 13-4. If a particular facility module needs to be removed for maintenance purposes on one data bus, the duplicate data bus is maintained intact, allowing for hot replacement of any of the facility modules, working and protect, even if a packet forwarding module protection switch is in effect at the time. Similarly on the output side of router 150, output data is rerouted up a data bus chain 106 to Channel 1 and then out of router 150.

In operation, if PFM 13-1 fails, a microprocessor in the line shelf containing the failed packet forwarding module detects the failure, notices if the system is configured for one-for-four protection, and instructs switches on facility modules 11-1 through 11-4 to switch traffic that used to be in Channel 1 down to Channel 4. Channel 4 contains facility modules 11-4P and 11-4W on the input side and facility modules 12-4P and 12-4W on the output side respectively of router 150. These modules are connected to optical inputs and outputs only when utilizing protect PFM 13-4 or 18-4 as a working module and not as protection for PFMs 13-0 through 13-3 or 18-0 through 18-3. If PFM 13-4 or 18-4 is a working module, then daisy chain bus 105, 106 is not utilized in any way, and there are simply 5 working inputs and 5 working outputs. Accordingly, two modes of operation are available; namely one-for-N protection, for example one-for-four; or zero-for-five protection, meaning no protect modules and five working modules. Without requiring any wiring changes, router system 150 will function in either mode.

An alternative operating mode designates input 101-N and output 102-N for lower priority traffic. That traffic would be deliberately interrupted in the event of a failure of any of the packet forwarding modules carrying higher priority traffic and requiring a protect packet forwarding module to service that failure.

Information is transferred from PFM 13-0 to internal optics modules (IOMs) 14 as chunk payloads of data. A chunk contains typically 400 bytes of data. Packets contained in virtual output queues of PFM13-0 that are destined for the same egress PFM can be combined to form a single chunk of data. Thus, multiple small packets can be placed in a chunk, or just a segment of a larger packet. A maximum of two chunks can be transferred from a PFM 13-0 to the IOMs 14-0W0 and 14-1W0 during each chunk period. The same chunks are replicated and transferred in parallel to IOMs 14-0W1 and 14-1W1.

IOM modules 14 encapsulate forward error correction (FEC) code words as check symbols into each of the chunks. The present implementation uses a conventional interleaved Reed-Solomon FEC coding. IO modules 14-0W0, 14-1W0 provide multiple working module capacity for a working zero optical switch plane. Similarly IO modules 14-0W1, 14-1W1 provide multiple working module capacity for a working one optical switch plane. Switch plane pairs in this case are not configured as working and protect, but as working copy zero and working copy one. Copy zero switch plane containing optical switch modules 15-1 through 15-6 and duplicate copy one switch plane containing optical switch modules 16-1 through 16-6 provide 6 optical switches worth of capacity.

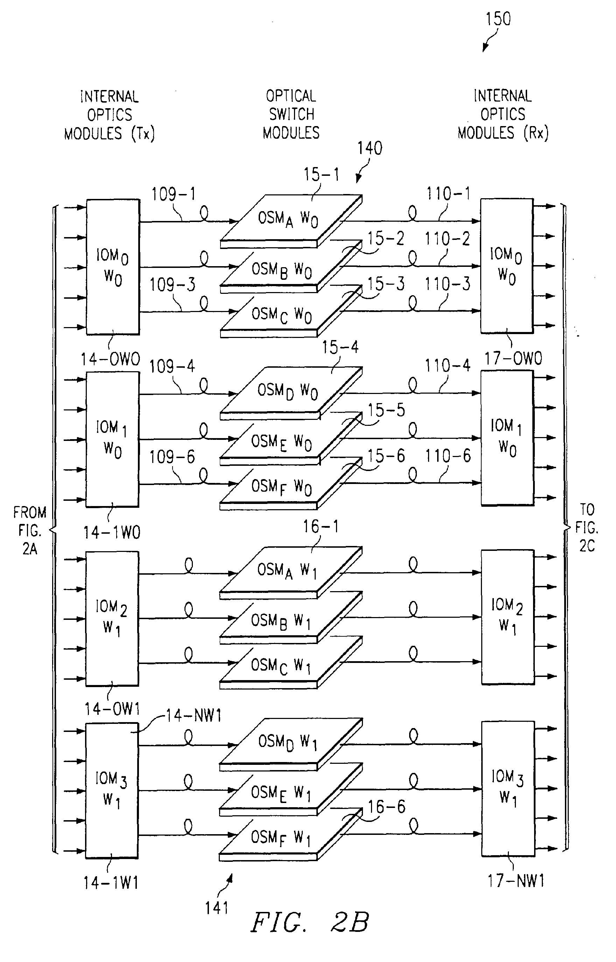

IOM 14-0W0 transfers information from PFM 13-0 to one of three optical switch modules 15-1, 15-2 and 15-3. IOM 14-0W0 sends the information to the appropriate optical switch module based on the decisions of the central arbiter module. Illustratively, one input comes into an optical switch module and one output goes out from that same optical switch module. In an actual system, these inputs and outputs in fact provide connectivity across router system 150. Fig. 2B shows optical switch module 15-1 connected to an egress side internal optics module 17-0W0 through an output fiber 110-1. For clarity, six such optical switch modules 15-1 through 15-6 are shown in the top portion of Fig. 2B. In fact, in one implementation each of these optical switch modules has 64 optical fibers in and 64 optical fibers out, with these 64 optical fiber pairs fanning out to many different line shelves. Different shelves have multiple fiber inputs and outputs. Six parallel optical switch modules 15-1 through 15-6 provide 6 times the data capacity of a single switch module. Other embodiments can have, for example, 36 of these modules rather than six.

Chunks of information are sent individually through optical switch modules 15-1 through 15-N and 16-1 through 16-N and received by IO modules 17 on line shelves at the egress side of router 150. IO module 17 checks the FEC check symbols to validate the accuracy of the data bits within the chunk. It then removes the FEC check symbols and transfers the chunk payloads to packet forwarding module 18-0, 18-1, 18-2, 18-3, or 18-4 as appropriate for each destination address. Similarly, the working one optical switch plane containing optical switch modules 16-1 through 16-N does substantially the same thing in parallel. Thus, working zero and working one optical switch planes perform this process duplicatively and in parallel. This allows the packet forwarding modules on the egress side, such as PFM 18-0, to select those chunk payloads that are error free either from working zero or from working one optical switch plane on a chunk by chunk basis. If there is an error in an optical switch, then egress PFM modules 18-0 through 18-N can identify which working switch plane, zero or one, is accurate. Consequently errors in a switch are contained within the router and do not ripple out through the network.

If there are only a few bit errors going through a switch, those errors can be corrected in real time by FEC decoding in IO modules 17. If a path through a working zero optical switch fails completely, then a path through the working one optical plane can be utilized instead. Further, because each IO module 17 computes the corrupted bits and how many bits were corrected on every path of the system, IO modules 17 provide a detailed fault analysis not only of the failed fiber or optical switch plane, but even down to the level of an individual route and individual switch defect which then can also be isolated. Importantly, the data flowing across for example OS Module 15-1 and across OS Module 16-1 in the absence of failures in the system are identical, byte for byte. This provides a hot standby, chunk for chunk.

After selecting error-free chunk payloads, packet forwarding modules 18-0 through 18-N then reassemble the chunks into individual IP packets and forward those packets across interface links 104, as previously described.

In Figs. 2A-2C for the purpose of clarity, corresponding input and output functions are shown on separate circuit cards in separate ½ line shelves 142 and 143 respectively. In some embodiments corresponding input and output functions are combined on a single circuit card in a single line shelf combining ½ line shelves 142 and 143, thereby creating a folded configuration. For example, working input facility module 11-0W and working output facility module 12-0W can be combined on a single physical printed circuit card with two optical connectors, one in and one out. Similarly protect input facility module 11-0P and protect output facility module 12-0P can be combined on a single physical circuit card with two optical connectors, one in and one out. Likewise, input and output packet forwarding modules 13-0 and 18-0 also can be combined on a single physical circuit card in a single line shelf. In a folded configuration, if packet forwarding modules 13-0 and 18-0 share the same physical card, then there is a single card for Channel 0, likewise a single card each for Channels 1, 2, 3, and a fifth card for a Protect channel 4. Because there is a single physical card for input and output functions, then if a card fails, the protection ratio is equal for both input and output modules on that card. In some embodiments internal optics modules 14-0W0 and 17-0W0 similarly share the same physical circuit card, which in the present implementation is contained in the same line shelf 142, 143 with combined input/output facility modules 11, 12 and combined input/output packet forwarding modules 13, 18.

Figs. 2A-2C illustrate an approach of employing 64x64 optical switches 15-1 through 15-6 and 16-1 through 16-6 in a three-stage switching fabric to support a 320x320 port router 150. The first stage electrically routes up to two chunk payloads each from five PFM modules 13-0 through 13-4 in parallel to all four ingress IO modules 14, where the payloads are encapsulated into chunks. Of ten possible chunks from the five PFMs 13, six are selected by IOMs 14 to be sent in duplicate through optical links 109 to respective working 0 and working 1 optical switch planes 15-1 through 15-6 and 16-1 through 16-6, which constitute the second switching fabric stage. In the third switching fabric stage egress IOMs 17 receive duplicate chunks from working 0 optical switch planes 15-1 through 15-6 and working 1 optical switch planes 16-1 through 16-6 across optical links 110, convert the chunks to electrical signals, strip away the encapsulation, and route the resulting chunk payloads electrically to five egress PFMs 18-0 through 18-4. The three-stage switching fabric advantageously allows the speedup of the switching fabric to be controlled by changing the number of optical switch subplanes per working 0 and working 1 planes, independently of the number of PFMs in a system. Speedup factor is the amount of extra bandwidth the fabric can provide for a port. In the present example each facility port has a bandwidth of 10 Gb/s. Each ingress ASIC has two 10 Gb/s ports to the internal optics ASIC, providing a speedup factor of two. Five ingress ASICs send chunks to internal optics ASICs, which send the chunks through six optical switch planes at 12.5 Gb/s, providing a rough speedup factor of (6*12.5)/(5*10) = 1.5 overall.

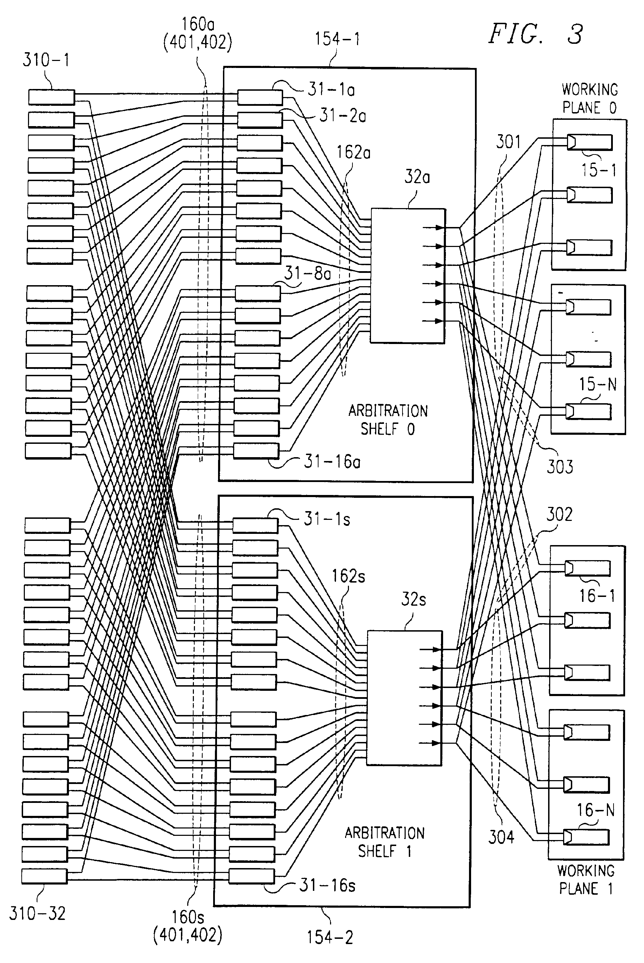

Fig. 3 is a diagram illustrating control data flow in router 150, according to an embodiment of the present invention. There are 32 line racks 310-1 through 310-32, each containing two line shelves. Each line shelf can have up to ten packet forwarding modules 13, 18. Thus there can be up to 640 packet forwarding modules 13, 18 that are represented by line racks 310-1 through 310-32. Packet forwarding modules 13 are configured in a one-for-four protection mode as described in connection with Figs. 2A-2C. An active arbiter shelf 154-1 makes all decisions for router 150, while it remains the active arbiter. A standby arbiter shelf 154-2 has enough traffic flowing through it to verify that all of the interfaces in and out of each of the modules and ASICs are working properly and are generating no error rates other than expected. Optical switch modules 15-1 through 15-N and 16-1 through 16-6 are configured in respective working zero and working one switch planes, such that each optical switch module is a subplane of a particular working plane.

Requests are transmitted from packet forwarding modules 13 represented by racks 310-1 through 310-32. Packet forwarding modules 13 send requests through optical links 160a (401, 402) and 160s (401, 402). Each packet forwarding module 13 sends a request to both active arbiter shelf 154-1 and standby arbiter shelf 154-2 through links 160a and 160s. These requests are received by active arbiter interface modules (AIM) 31-1a through 31-16a and standby AIM modules and 31-1s through 31-16s. Each arbiter interface module receives multiple requests. There can be up to 40 packet forwarding modules 13 connected to each of arbiter interface modules 31. From each packet forwarding module 13, an arbiter interface module 31 can receive up to two requests per chunk period for a total of up to 80 requests per chunk period. An arbiter interface module 31 converts those 80 requests received optically into electrical signals to be transferred across the back plane of arbiter shelf 154-1, 154-2 through links 162a, 162s to central arbiter module (CAM) 32a, 32s. CAM 32a, 32s receives this request and, based on previous requests as well as current requests, it makes a decision for a future chunk period as to the configuration of optical switches 15.

Once CAM 32a has made this decision for a future chunk period, it sends grants back along the path on which the requests came, and sends the corresponding switch configuration information forward to optical switch modules 15-1 through 15-N and 16-1 through 16-N. For example, grant information leaves central arbiter module 32a and travels back through electrical links 162a to arbiter interface modules 31-1a through 31-16a. At this point in time, arbiter interface module 31-1a through 31-16a converts the grant information from electrical signals to optical signals, which are passed through links 160a to packet forwarding modules 13 within line racks 310-1 through 310-32. During the same time that the grants are passed back to the packet forwarding modules, switch configuration information is passed forward from CAM 32a to optical switch modules 15-1 through 15-N and 16-1 through 16-6. Active CAM 32a passes the configuration information through optical links 301 and 302 to optical switch modules 15-1 through 15-6 and 16-1 through 16-6. Only one of arbiter shelves 154-1, 154-2 is active at any point in time. Accordingly, the result of a switch configuration decision by active CAM 32a is passed to all optical switch modules both in working zero plane 15-1 through 15-N and in working one plane 16-1 through 16-6.

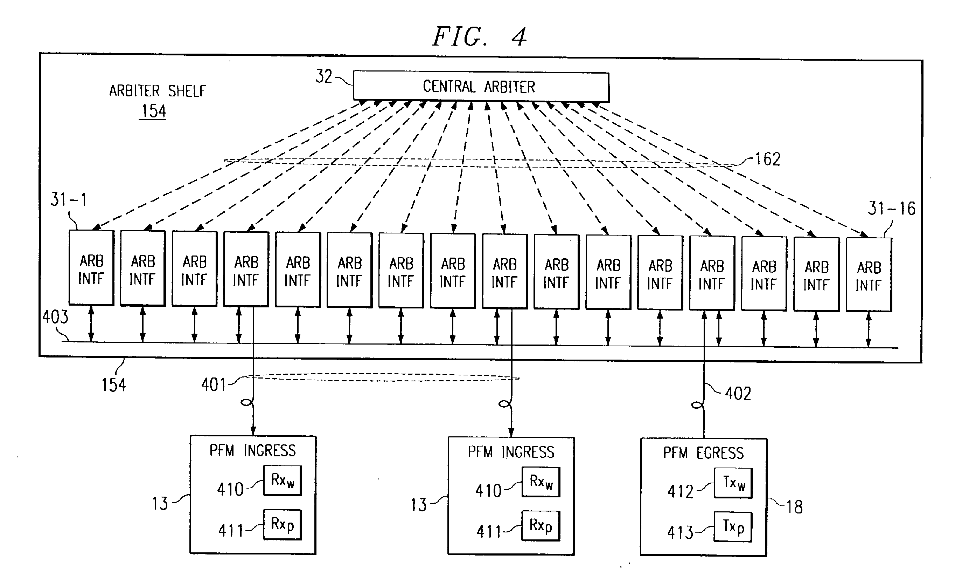

Fig. 4 is a block diagram showing a service queue flow control structure. Service queue flow control is a mechanism that is used to disable packet forwarding modules 13 on the input side of optical switch 15, 16 from sending traffic to the output side of the optical switch on selected output queues. If an output queue starts to fill up beyond a predetermined threshold, it will inform the input side of the optical switch to stop sending packets to that particular output queue. The process starts by having packet forwarding module 18 on the egress side, where the queue is beginning to fill, send flow control information from a working or protect transmitter 412 or 413 through an optical link 402 to a counterpart arbiter interface module 31-1 through 31-16. Link 402 is also used to send requests to arbiter interface module 31 for other purposes.

Once the flow control information, saying whether to stop or to start sending to a queue, reaches arbiter interface module 31, the arbiter interface modules 31-1 through 31-16 all communicate with each other through an interconnect mechanism 403. Although the actual interconnect implementation uses a point-to-point configuration, which allows arbiter interface modules 31-1 through 31-16 to be missing or disabled without disrupting flow control communication, interconnect mechanism 403 is shown for simplicity as a bus. Thus, in the present example flow control information is sent to 15 other arbiter interface modules within the active arbiter shelf. The arbiter interface modules 31 then send that information out through optical links 401 to receivers 410 and 411 of all ingress packet forwarding modules 13 in the system, which can then set a bit associated with the virtual output queue on the input side of the optical switch, specifying that it should stop sending chunks through optical switch 15, 16 to the output side. Central arbiter module 32 and links 162 connecting central arbiter module 32 to each of the arbiter interface modules 31-1 through 31-16 do not participate directly in the flow control process, but are illustrated as components of arbiter shelf 154. It is noted that optical links 401, 402 of Fig. 4 are collectively a subset of the manifold of optical links 160a, 160s shown in Fig. 3.

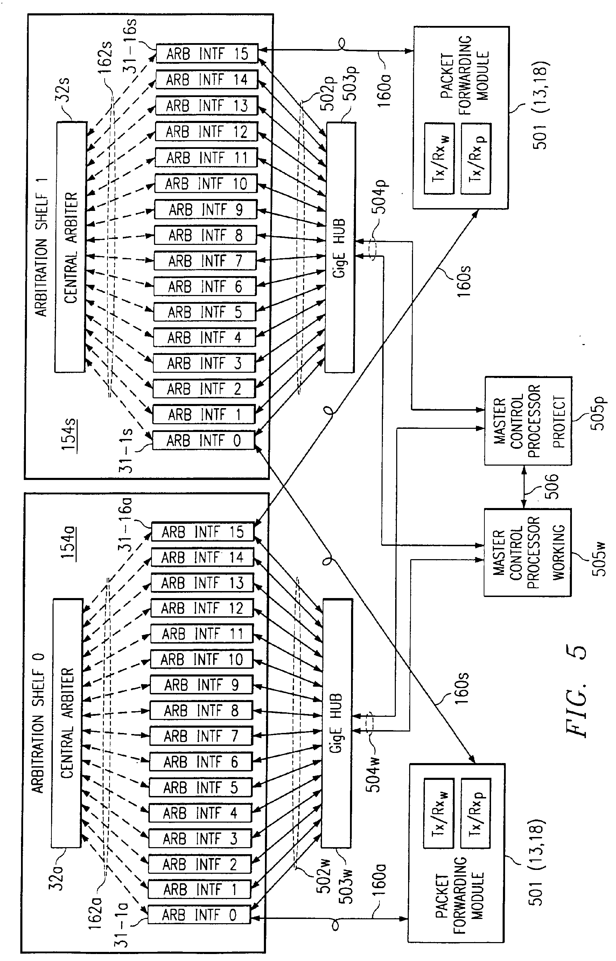

Fig. 5 is a flow diagram showing the communication paths that are used between a master control processor and the packet forwarding modules. These communication paths serve multiple purposes. They are used to communicate the forwarding information tables out to the packet forwarding modules, such that they can make decisions for routing packets through the system. Additionally, they are used to communicate point-to-point information from a master control processor to an individual packet forwarding module. On the inbound side, packet forwarding modules receive many packets. Some of the packets, typically less than one percent, will have exception issues with which the local packet forwarding module cannot determine how to deal. These packets must then be forwarded from the packet forwarding module to the master control processor, which can make the decision how to deal with the packet. Some packets carry information that is to be used by the master control processor to determine overall network topology, including router 150. If a network topology change occurs, then considerable traffic will go through the network from one master control processor on one router to a different master control processor on a different router enabling them to communicate with each other, so that they all understand the new network topology. Accordingly, traffic flows both from the packet forwarding module to the master control processor and in the reverse direction from the master control processor, back to the packet forwarding modules and then out through the facility interfaces to other routers within the overall network.

Fig. 5 shows packet forwarding modules 501, representing PFM modules 13 and 18 as depicted on the ingress and egress sides respectively of Fig. 1. Packet forwarding module 501 transmits packets that are ultimately destined for a master control processor through optical links 160a and 160s to both active and standby arbiter shelves respectively 154a and 154s. At an arbiter shelf 154a, 154s, a packet is received by an arbiter interface module among the multiple AIM modules 31-1a through 31-16a and 31-1s through 31-16s. The arbiter interface module then sends the packet information through links 502W and 502P to gigabit Ethernet hubs (gigE hubs) 503W and 503P, which are standard OEM equipment. Each gigE hub then passes the packet information on to both a working and a protect master control processor (MCP), 505W and 505P, respectively, through links 504W and 504P. Working master control processor 505W generally makes the decisions and handles the communication, whereas protect master control processor 505P acts only as a backup in case of a problem with the working MCP. Link 506 is a communication path between MCPs 505W and 505P used to synchronize the two control processors and to provide a heartbeat mechanism to make sure that working MCP 505W is continuing to perform as expected.

The reverse communication path from MCP 505W, 505P back to PFM module 501 follows the same line in the reverse order, although there are now two communication modes. In one mode an individual packet is sent point-to-point to one of the individual packet forwarding modules 501, in which case it again follows a particular path all the way back to the designated packet forwarding module 501. In the second mode, master control processor 505W broadcasts a forwarding information base to all packet forwarding modules 501 simultaneously, such that they all have the new information needed to forward packets through router 150. In this mode, master control processor 505W sends the information packet through links 504P and 504W to gigE hubs 503P and 503W. Within the packet is information that specifies that it is to be rebroadcast to all packet forwarding modules 501. The gigE hubs then send that packet in parallel to all of its output interface ports 502W and 502P. All arbiter interface modules 31 then receive the packet and forward it to all packet forwarding modules 501 through optical links 160a and 160s.

In summary, the broadcast mode starts with a single packet from a master control processor 505W to gigE hubs 503W, 503P, which then replicate it up to 16 different arbiter interface modules 31. The arbiter interface modules then replicate the packet to send it to up to 640 packet forwarding modules 501 of router 150. In Fig. 5, central arbiter modules 32a, 32s and links 162a, 162s between central arbiter 32a, 32s and arbiter interface modules 31 are not involved in the MCP-PFM communication process. However, optical links 160a and 160s are used for three distinct purposes that have been described. First is transmission of optical request and grant information described in connection with Fig. 3, second is transmission of control information described in connection with Fig. 4, and third is the communication between the MCP and packet forwarding modules described in connection with Fig. 5.

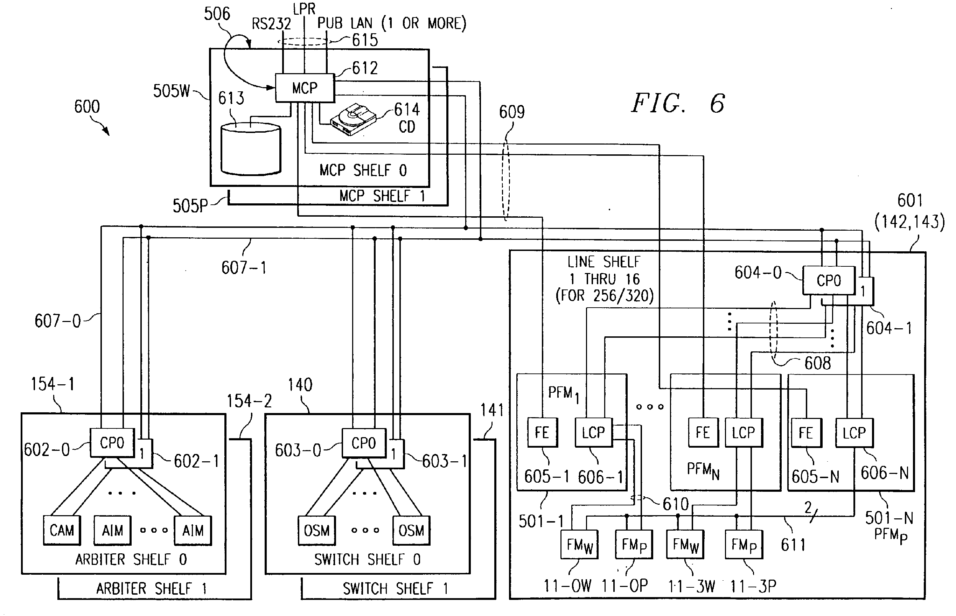

Fig. 6 is a schematic diagram showing a logical view of a control subsystem 600 for router 150. Control subsystem 600 is responsible for initialization, monitoring and alarming the system. The heart of the control system is master control processor (MCP) 505W or 505P. MCP 505W, 505P includes an actual computer system 612, for example an Intel-based X86 system or other computer system with comparable capabilities. External communication is accomplished via links 615, for example, with an RS232 port, public LAN, line printer (LPR) or other type of communication port. Also within MCP 505W, 505P is a mechanism to communicate between computer system 612 and a storage medium 614 to update software, for example writeable CD used for backup and loading new software into MCP 505W, 505P, as well as hard drives 613 for the MCP. Drives 613 are configured for reliability, for example as a RAID disk system. Alternative mechanisms to download software include distributing a software update across the World Wide Web or other network interconnected with router 150 via e-mail or some other method to a destination of router 150. Router 150 could then receive the download software, verify its integrity, and then apply either patches or entire updates to the system internal software. Link 506 is a communication path between the two MCPs 505W and 505P that is used for heartbeat information as well as for synchronized working MCP 505W and protect MCP 505P. MCP 505W, 505P communicate with the rest of router system 150 through control network (CNET) links 607-0 and 607-1.

Control network 607-0, 607-1 communicates with all control processors (CPs) in each of the shelves of router system 150. There are three categories of shelves in router system 150, including arbiter shelves 154-1 and 154-2, switch shelves 140 and 141, and line shelves 601, which preferably combine both the ingress line shelf 142 and egress line shelf 143 (see Fig. 2). In arbiter shelf 154-1, 154-2 are CPs 602-0 and 602-1 working and protect control processors. These modules receive redundant CNET links 607-0 and 607-1, such that if either CNET link fails, communication continues to both control processors 602-0 and 602-1 from MCP 505W, 505P. Similarly, control processors 603-0 and 603-1 in switch shelves 140, 141 communicate with MCP 505W, 505P through redundant CNET links 607-0 and 607-1. The shelf control processors, whether in the arbiter shelf 154-1, 154-2 or switch shelf 140, 141 control all of the modules within those respective shelves. All other modules, whether CAM, AIM or OSM, are passive as far as the control process is concerned, and all activity is done via reading and writing control and status registers (CSRs) on those other modules. Links between control processors 602-0, 602-1 or 603-0, 603-1 and the other modules within their respective shelves are high speed communication links that apply control and status checks to reads and writes. Control processors within arbiter shelf and switch shelf 154 and 140, 141, respectively, initialize the modules and monitor the modules on those shelves using CSR reads and writes, and receive interrupts if an alarm occurs for which some action must be taken.

Line shelf 601 includes a pair of control processor modules 604-0 and 604-1. CP modules 604-0, 604-1 manage the other modules within line shelf 601, including packet forwarding modules 501-1 through 501-N, facility modules 11-0W through 11-3W and 11-0P through 11-3P, and internal optics modules (not shown in Fig. 6). Packet forwarding modules 501-1 through 501-N perform sufficient functions that they each have a dedicated local control processor (LCP) 606-1 through 606-N respectively. LCP 606-1 through 606-N communicate with CP modules 604-0, 604-1 through links 608. LCP 606-1 through 606-N are each responsible for managing a packet forwarding module on which the LCP resides, as well as the pair of facility modules, for example 11-0W, 11-0P, that are directly connected to that packet forwarding module. The local control processor of a packet forwarding module is responsible for initialization of that packet forwarding module and the associated paired facility modules, as well as performing monitoring and alarm status for those modules. A packet forwarding module also needs to update its forwarding information base, used by forwarding engines 605-1 through 605-N. The local control processor receives forwarding update information from MCP 505W, 505P through routing network (RNET) links 609 and delivers it to forwarding engine 605-1 through 605-N, which can then update its forwarding table.

Communication between LCP 606-1 through 606-N and facility module 11-0W through 11-NW and 11-0P through 11-NP is through links 610, which are high speed point-to-point links to provide adequate communication. A link 611 extends from protect packet forwarding module 501-N, which must communicate to all of the facility modules within the shelf since, in a protect situation, protect packet forwarding module 501-N may need to take over the function of any of the other packet forwarding modules, and thus to take ownership of the facility modules attached to any such failed packet forwarding module. Routing network links 609 in Fig. 6 are shown in a simplified view only between MCP 505W, 505P and forwarding engines 605-1 through 605-N. Actual RNET links 609 are more complex, involving AIM modules 31-1a through 31-16a and 31-1s through 31-16s with a fanout distribution that employs gigabit Ethernet hubs 503W, 503P as well as RNET interface modules.

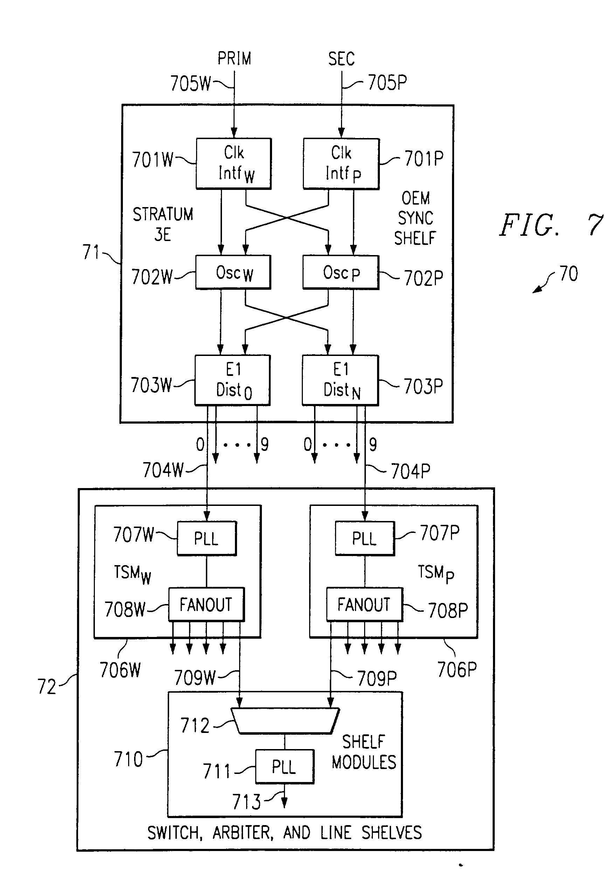

Fig. 7 is a clock distribution diagram for router 150. A timing signal is typically derived externally from a building infrastructure timing source (BITS) or a GPS receiver. The timing source supplies two timing references, a primary and a secondary, which enter an OEM sync shelf 71 through respective links 705W and 705P. The external timing references typically use a T1 standard (1.544 MHz) but can be any rate. Links 705W, 705P are typically twisted pair electrical conductors, which are a good choice because the clock frequency is relatively low. Primary and secondary references come into respective clock interface modules 701W and 701P, and are replicated for reliability purposes. From clock interface modules 701W, 701P they go to internal oscillator modules 702W working and 702P protect, and from there to E1 distribution modules 703W working and 703P protect. Accordingly, OEM synch shelf 71 has no single points of failure within the shelf itself. If both primary and secondary inputs 705W and 705P were to fail for whatever reason, then internal oscillators 702W, 7602P can take over and provide the rest of router system 150 with stable clocks having at least a stratum 3E level of frequency stability.

The timing signals are distributed from E1 distribution modules 703W, 703P to the rest of the shelves of the system using links 704W and 704P, which again typically use twisted pair electrical conductors and run at an E1 rate (2.048 MHz). OEM sync shelf 71 brings in timing signals at a T1 rate and delivers them at an E1 rate. An E1 rate is advantageous for the system internally, providing better frequency stability than does T1, based on the amount of division required for generating common frequencies within the system. A twisted pair of these E1 clock references is supplied to each shelf 72 in the system, including switch shelves 140, 141, arbiter shelves 154-1, 154-2, and line shelves 601 (see Fig. 6). Within each shelf is a pair of timing and synchronization modules, a working module 706W and a protect module 706P. Timing and synchronization module 706W, 706P is responsible for bringing in the E1 frequency, sending it through a phase lock loop (PLL) 707W, 707P to clean up the clock source, and fanning it out through fanout devices 708W, 708P and respective links 709W, 709P to all other modules 710 within shelf 72. Thereby, each of the remaining modules within shelf 72 receives a duplicate pair of E1 timing reference signals.

Within each shelf module 710 there is a MUX 712, used to select which timing source (working or protect) is used at any particular point in time. The selected timing source is then sent through an additional PLL circuitry 711, which multiplies the selected source frequency up to the operating frequency that is used within the particular shelf module 710. Within each shelf module 710 a typical base frequency is 155.52 MHz, although any appropriate frequency could be applied within a system. Each shelf module 710 has its independent timing crystal (not shown in Fig. 7), such that if a protection switchover needs to occur using MUX 712, then internal PLL 711 provides a reference base to sustain operation during the switchover period.

The reason for the above-described timing distribution is twofold: SONET interfaces on the line shelves have very strict requirements relating to frequency jitter at those interfaces. If the interfaces are not synchronized to the remainder of the larger network, for example to the building infrastructure timing source, then alarms occur in other systems downstream of router system 150. Thus, if there are any SONET interfaces, it is a probable requirement that these SONET interfaces have a stable timing source coming, *e.g.*, from the building infrastructure. Also, it is very important to have frequency stability going through the optical switch module, such that the launch of the chunks to the optical switch modules is synchronized very tightly with the corresponding control information. The optical switch module is able to tolerate up to 5 parts per million of drift or jitter within the system. Accordingly, the timing and synchronization modules as well as the shelf modules within each shelf have an internal independent crystal frequency stability within five parts per million. Consequently, synchronization shelf 71 is not strictly required for the optical switch module to work properly, but only for the SONET interfaces to be synchronized properly with the remainder of the system.

Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A router system configured for distributing information packets from multiple sources to multiple destinations within a network, said router system comprising:
an optical switch having an N by M crossbar configuration, said optical switch being located within the core of said router system and having within said optical switch a plurality of ingress ports and a plurality of egress ports, wherein N is the integer number of ingress ports and M is the integer number of egress ports of said optical switch; and
a plurality of optical fibers internal to said router system and connected to said ingress ports and to said egress ports, the lengths of said optical fibers being variable over a range from approximately 5 meters to approximately 150 meters.

2. The router system of claim 1 wherein said router system further comprises a plurality of input and output interface ports.

3. The router system of claim 2 wherein each of said input and output interface ports comprises two paired duplicate facility module circuit cards.

4. The router system of claim 3 wherein said paired duplicate facility module cards are connected in parallel to a single packet forwarding module, such that one packet forwarding module is connected to each of said input and output interface ports.

5. The router system of claim 4 wherein each of said packet forwarding modules is interconnected with a plurality of internal optics modules, said plurality of internal optics modules comprising:
ingress internal optics modules interconnected with ingress ports of said optical switch; and
egress internal optics modules interconnected with egress ports of said optical switch.

6. The router system of claim 5 wherein said router is disposed in a folded configuration, such that an ingress internal optics module and an egress internal optics module reside on a common circuit card.

7. The router system of claim 3 wherein said router is disposed in a folded configuration, such that each of said paired duplicate circuit cards contains an input interface port and an output interface port.

8. The router system of claim 2 wherein said router comprises 320 input interface ports and 320 output interface ports.

9. The router system of claim 5 further comprising a plurality of said optical switches, said optical switches being configured such that each of said internal optics modules is interconnected with multiple optical switches.

10. The router system of claim 9 wherein each of said internal optics modules is interconnected with at least three optical switches.

11. A method of distributing information packets through a router system from multiple sources to multiple destinations within a network, comprising:
passing the packet information through an optical switch having an N by M crossbar configuration, said optical switch being located within the core of the router system and having within said optical switch a plurality of ingress ports and a plurality of egress ports, wherein N is the integer number of ingress ports and M is the integer number of egress ports of said optical switch; and
passing said packet information through a plurality of optical fibers internal to said router system and connected to said ingress ports and to said egress ports, the lengths of said optical fibers being variable over a range from approximately 5 meters to approximately 150 meters.

12. The method of claim 11 further comprising receiving said information packets at a plurality of input and output interface ports of said router.

13. The method of claim 12 wherein duplicate information packets are received at a duplicate pair of input interface ports of said router.

14. The method of claim 11 wherein said packet information is formatted into substantially uniform information chunks prior to passing through said optical switch, such that one chunk passes through said optical switch during a chunk period.

15. The method of claim 14 wherein said optical switch is reconfigured dynamically during a time interval between passing successive information chunks through said optical switch.

16. The method of claim 15 wherein said optical switch is reconfigured dynamically during a time period ranging from approximately 32 nanoseconds to approximately 40 nanoseconds.

17. The method of claim 15 wherein said time interval between passing successive information chunks through said optical switch is approximately 50 nanoseconds.

18. The method of claim 15 wherein said reconfiguring of said optical switch is synchronized relative to the passage of said information chunk through said optical switch.

19. The method of claim 18 wherein a single active central arbiter within said router determines the configuration of said optical switch for each said chunk period.

20. The method of claim 19 wherein, in the event of failure of said active central arbiter, a standby central arbiter determines the configuration of said optical switch for each said chunk period.

21. The method of claim 14 further comprising passing duplicate information chunks through said router along redundant paths, thereby providing fault protection internal to said router.

22. The method of claim 14 further comprising protect switching information chunks from a working path onto a protect path in the event of failure of said working path, thereby providing fault protection internal to said router.

23. The method of claim 14 wherein forward error correction (FEC) coding is appended to each said information chunk.

24. The method of claim 14 wherein a cyclic redundancy check (CRC) is performed on each information chunk.

25. The method of claim 14 wherein said information chunks are reformatted into information packets after passing through said optical switch and prior to exiting said router system.

26. The method of claim 14 wherein P said chunks pass along P parallel data paths through P said optical switches during a same chunk period, wherein P is a positive integer.

27. The method of claim 26 wherein said P chunks pass along R data paths prior to passing along said P data paths, wherein R is a positive integer.

28. The method of claim 26 wherein said P chunks pass along S data paths after passing along said P data paths, wherein S is a positive integer.

29. A router system configured for distributing information packets from multiple sources to multiple destinations within a network, said router system comprising a switching fabric interconnected with a plurality of input and output interface ports, each of said input and output interface ports comprising two paired duplicate facility module circuit cards.

30. The router system of claim 29 wherein said paired duplicate facility module cards are connected in parallel to said switching fabric through a single packet forwarding module, such that one packet forwarding module is connected to each of said input and output interface ports.

31. The router system of claim 29 wherein said router is disposed in a folded configuration, such that each of said paired duplicate circuit cards contains an input interface port and an output interface port.

32. The router system of claim 29 wherein said router comprises 320 input interface ports and 320 output interface ports.

33. A method of distributing information packets from multiple sources to multiple destinations within a network through a router system having a switching fabric, comprising:
receiving duplicate information packets at a duplicate pair of input interface ports of said router;
formatting said packet information into substantially uniform information chunks; and
passing said information chunks through said switching fabric, such that one chunk passes through said switching fabric during a chunk period.

34. The method of claim 33 wherein a single active central arbiter within said router determines the configuration of said switching fabric for each said chunk period.

35. The method of claim 34 wherein, in the event of failure of said active central arbiter, a standby central arbiter determines the configuration of said switching fabric for each said chunk period.

36. The method of claim 33 further comprising passing duplicate information chunks through said router along redundant paths, thereby providing fault protection internal to said router.

37. The method of claim 33 further comprising protect switching information chunks from a working path onto a protect path in the event of failure of said working path, thereby providing fault protection internal to said router.

38. The method of claim 33 wherein forward error correction (FEC) coding is added to each said information chunk.

39. The method of claim 33 wherein a cyclic redundancy check (CRC) is performed on each information chunk.

40. An internet protocol (IP) router comprising a plurality of remotely distributed interconnected equipment shelves containing:
an optical switch fabric incorporating a plurality of optical switch ports and at least one optical switch;
a plurality of packet forward modules (PFMs); and
a plurality of facility interfaces.

41. The IP router of claim 40 wherein the length of said interconnect between said equipment shelves is variable over a range from approximately 5 meters to approximately 150 meters.

42. The IP router of claim 40 wherein said optical switch fabric comprises three stages including a first electrical stage, an optical stage, and a second electrical stage.

43. The IP router of claim 42 wherein said optical switch fabric has a speedup factor, such that said speedup factor is adjustable by changing the number of optical switches.

44. The IP router of claim 42 wherein the number of said facility interfaces of said router is increased by increasing the number of said optical switch ports.

45. The IP router of claim 40 wherein said optical switch fabric is redundant.

46. The IP router of claim 40, further comprising one single point of arbitration for said optical switch fabric.

47. An IP router comprising a redundant communication path.

48. The IP router of claim 47 comprising a plurality of communication paths, such that all communication paths are redundant.

49. An IP router comprising a plurality of remotely distributed interconnected equipment shelves containing:
a plurality of communication paths;
a centralized arbitration function; and
a plurality of packet forward modules (PFMs).

50. The IP router of claim 49 wherein said centralized arbitration function comprises redundant copies.

51. The IP router of claim 50 wherein said redundant copies are contained inifferent equipment shelves.

52. The IP router of claim 49 wherein said centralized arbitration function is interconnected with said PFMs through optical communication paths.

53. The IP router of claim 52 wherein said optical communication paths are terminated on central arbiter interface modules.

54. The IP router of claim 50 wherein said PFMs are interconnected with said redundant central arbiter function through redundant communication paths.

55. The IP router of claim 49, further comprising an optical switch interconnected with said centralized arbiter function through optical communication paths.

56. The IP router of claim 49, further comprising:
a switch fabric having an ingress side and an egress side; and
a flow control mechanism from said egress side to said ingress side of said switch fabric.

57. The IP router of claim 56 wherein said central arbiter function is contained in a central arbiter shelf, said central arbiter shelf being configured to incorporate a central hub for distributing information of said flow control mechanism

58. The IP router of claim 56 wherein said flow control mechanism and said centralized arbitration function use the same communication paths.

59. An IP router comprising redundant master control processors (MCPs) configured to perform routing protocol computations.

60. The IP router of claim 59, further comprising a plurality of packet forward modules (PFMs), such that said MCPs are interconnected with said PFMs through redundant communication paths.

61. The IP router of claim 60 further comprising a centralized arbitration function interconnected with said redundant communication paths.

62. A method of control processing in an IP router system incorporating master control processors and packet forwarding modules, wherein said master control processors communicate with said packet forwarding modules through redundant communication paths.
